# EUROPEAN PATENT APPLICATION

(11) **EP 4 387 311 A1**
(43) Date of publication of application: **19.06.2024**
(21) Application number: 22855379.8
(22) Date of filing: 08.08.2022
(51) Int. Cl.: H04W 24/02

(54) **COMPUTING SESSION UPDATE METHOD AND DEVICE, TERMINAL, AND NETWORK FUNCTION ENTITY**

(30) Priority: 10.08.2021 CN 202110914375
(71) Applicant: Vivo Mobile Communication Co., Ltd., Dongguan, Guangdong 523863 (CN)
(72) Inventor: KANG, Yanchao, Dongguan, Guangdong 523863 (CN); CHONG, Weiwei, Dongguan, Guangdong 523863 (CN); WU, Xiaobo, Dongguan, Guangdong 523863 (CN)
(74) Representative: Conti, Marco
(86) International application number: PCT/CN2022/110835
(87) International publication number: WO 2023/016398

(57) **Abstract**

This application discloses a computing session update method and apparatus, a terminal, and a network functional entity, and pertains to the field of communication technologies. The computing session update method in embodiments of this application includes: Aterminal sends a first message to a first function, where the first function is a session management function SMF or a computing power management function, and the first message is used to request to update at least one of a communication resource and a computing power resource in a computing session.

## Description

### CROSS-REFERENCE TO RELATED APPLICATIONS

This application claims priority to Chinese Patent Application No. 202110914375.9 filed in China on August 10, 2021, which is incorporated herein by reference in its entirety.

### TECHNICAL FIELD

This application pertains to the field of communication technologies, and specifically relates to a computing session update method and apparatus, a terminal, and a network functional entity.

### BACKGROUND

At present, a communication system provides only communication resource allocation and ensures only communication quality of service requirements of a terminal. When the terminal or a third-party device needs to perform a specific complex computing task but does not have sufficient computing resources and capabilities, wireless communication operators may provide corresponding computing resources and computing power. However, an existing communication system cannot comprehensively consider communication computing requirements of a large number of users, cannot provide both communication resources and computing power resources that meet computing service requirements for the users, and cannot update and allocate communication resources and computing power resources in a network.

### SUMMARY

Embodiments of this application provide a computing session update method and apparatus, a terminal, and a network functional entity. This can resolve a problem in a related technology that a network cannot update and allocate, based on a change in a computing service requirement or a change in a network status, a communication resource and a computing power resource that are allocated to a user.

According to a first aspect, a computing session update method is provided. The method includes:
A terminal sends a first message to a first function, where
the first function is a session management function SMF or a computing power management function, and the first message is used to request to update at least one of a communication resource and a computing power resource in a computing session.

According to a second aspect, a computing session update method is provided. The method includes:
A session management function SMF obtains a first message from a terminal, where the first message is used to request to update at least one of a communication resource and a computing power resource in a computing session; and
the SMF updates at least one of the computing power resource and the communication resource for the computing session based on the first message.

According to a third aspect, a computing session update method is provided. The method includes:
A computing power management function obtains a first message from a terminal, where the first message is used to request to update at least one of a communication resource and a computing power resource in a computing session; and
the computing power management function updates at least one of the computing power resource and the communication resource for the computing session based on the first message.

According to a fourth aspect, a computing session update method is provided. The method includes:
An access and mobility management function AMF obtains a fifth message from a terminal; and
the AMF sends a first message to a first function based on the fifth message, where
the first function is a session management function SMF or a computing power management function, and the first message is used to request to update at least one of a communication resource and a computing power resource in a computing session.

According to a fifth aspect, a computing session update method is provided. The method includes:
A computing storage resource node obtains updated computing power QoS information sent by a computing power management function; and
the computing storage resource node updates a computing power resource in a computing session based on the updated computing power QoS information, where
the updated computing power QoS information is determined by the computing power management function based on an updated computing power management policy obtained by using a first message, and the first message is used to request to update at least one of a communication resource and the computing power resource in the computing session.

According to a sixth aspect, a computing session update apparatus is provided. The apparatus includes:
a first sending module, configured to send a first message to a first function, where
the first function is a session management function SMF or a computing power management function, and the first message is used to request to update at least one of a communication resource and a computing power resource in a computing session.

According to a seventh aspect, a computing session update apparatus is provided. The apparatus includes:
a first obtaining module, configured to obtain a first message from a terminal, where the first message is used to request to update at least one of a communication resource and a computing power resource in a computing session; and
a first update module, configured to update at least one of the computing power resource and the communication resource for the computing session based on the first message. According to an eighth aspect, a computing session update apparatus is provided. The apparatus includes:
   a second obtaining module, configured to obtain a first message from a terminal, where the first message is used to request to update at least one of a communication resource and a computing power resource in a computing session; and
   a second update module, configured to update at least one of the computing power resource and the communication resource for the computing session based on the first message. According to a ninth aspect, a computing session update apparatus is provided. The apparatus includes:
      a third obtaining module, configured to obtain a fifth message from a terminal; and
      a second sending module, configured to send a first message to a first function based on the fifth message, where
      the first function is a session management function SMF or a computing power management function, and the first message is used to request to update at least one of a communication resource and a computing power resource in a computing session.

According to a tenth aspect, a computing session update apparatus is provided. The apparatus includes:
a fourth obtaining module, configured to obtain updated computing power QoS information sent by a computing power management function; and
a second update module, configured to update a computing power resource in a computing session based on the updated computing power QoS information, where
the updated computing power QoS information is determined by the computing power management function based on an updated computing power management policy obtained by using a first message, and the first message is used to request to update at least one of a communication resource and the computing power resource in the computing session.

According to an eleventh aspect, a terminal is provided. The terminal includes a processor, a memory, and a program or instructions that is/are stored in the memory and that may be run on the processor. When the program or the instructions is/are executed by the processor, steps of the computing session update method according to the first aspect are implemented. According to a twelfth aspect, a terminal is provided. The terminal includes a processor and a communication interface. The communication interface is configured to send a first message to a first function, where the first function is a session management function SMF or a computing power management function, and the first message is used to request to update at least one of a communication resource and a computing power resource in a computing session.

According to a thirteenth aspect, a network side functional entity is provided. The network side device includes a processor, a memory, and a program or instructions that is/are stored in the memory and that may be run on the processor. When the program or the instructions is/are executed by the processor, steps of the computing session update method according to the second aspect are implemented, or steps of the computing session update method according to the third aspect are implemented, or steps of the computing session update method according to the fourth aspect are implemented, or steps of the computing session update method according to the fifth aspect are implemented.

According to a fourteenth aspect, a readable storage medium is provided. The readable storage medium stores a program or instructions. When the program or the instructions is/are executed by a processor, steps of the computing session update method according to the first aspect are implemented, or steps of the computing session update method according to the second aspect are implemented, or steps of the computing session update method according to the third aspect are implemented, or steps of the computing session update method according to the fourth aspect are implemented, or steps of the computing session update method according to the fifth aspect are implemented.

According to a fifteenth aspect, a chip is provided. The chip includes a processor and a communication interface, the communication interface is coupled to the processor, and the processor is configured to run a program or instructions, to implement steps of the computing session update method according to the first aspect, or implement steps of the computing session update method according to the second aspect, or implement steps of the computing session update method according to the third aspect, or implement steps of the computing session update method according to the fourth aspect, or implement steps of the computing session update method according to the fifth aspect.

According to a sixteenth aspect, a computer program/program product is provided. The computer program/program product is stored in a non-transient storage medium, and the computer program/program product is executed by at least one processor, to implement steps of the computing session update method according to the first aspect, or implement steps of the computing session update method according to the second aspect, or implement steps of the computing session update method according to the third aspect, or implement steps of the computing session update method according to the fourth aspect, or implement steps of the computing session update method according to the fifth aspect.

According to a seventeenth aspect, a communication device is provided. The communication device is configured to perform steps of the computing session update method according to the first aspect, or perform steps of the computing session update method according to the second aspect, or perform steps of the computing session update method according to the third aspect, or perform steps of the computing session update method according to the fourth aspect, or perform steps of the computing session update method according to the fifth aspect.

In embodiments of this application, the terminal can send the first message to the first function to initiate a computing session update procedure, to request to update the communication resource and/or the computing power resource in the computing session, and finally implement updating of the communication resource and/or the computing power resource in the computing session, to meet a computing service requirement of the terminal.

### BRIEF DESCRIPTION OF DRAWINGS

FIG. 1a is a first schematic diagram of a communication architecture to which an embodiment of this application is applicable;
FIG. 1b is a second schematic diagram of a communication architecture to which an embodiment of this application is applicable;
FIG. 2 is a first flowchart of a computing session update method according to an embodiment of this application;
FIG. 3 is a second flowchart of a computing session update method according to an embodiment of this application;
FIG. 4 is a third flowchart of a computing session update method according to an embodiment of this application;
FIG. 5 is a fourth flowchart of a computing session update method according to an embodiment of this application;
FIG. 6 is a fifth flowchart of a computing session update method according to an embodiment of this application;
FIG. 7 is a sixth flowchart of a computing session update method according to an embodiment of this application;
FIG. 8 is a seventh flowchart of a computing session update method according to an embodiment of this application;
FIG. 9 is a first structural diagram of a computing session update apparatus according to an embodiment of this application;
FIG. 10 is a second structural diagram of a computing session update apparatus according to an embodiment of this application;
FIG. 11 is a third structural diagram of a computing session update apparatus according to an embodiment of this application;
FIG. 12 is a fourth structural diagram of a computing session update apparatus according to an embodiment of this application;
FIG. 13 is a fifth structural diagram of a computing session update apparatus according to an embodiment of this application;
FIG. 14 is a structural diagram of a communication device according to an embodiment of this application; and
FIG. 15 is a structural diagram of a terminal according to an embodiment of this application.

### DESCRIPTION OF EMBODIMENTS

The following clearly describes technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application shall fall within the protection scope of this application.

The terms "first", "second", and the like in this specification and the claims of this application are used to distinguish between similar objects instead of describing a specific order or sequence. It should be understood that, the terms used in such a way is interchangeable in proper circumstances, so that embodiments of this application can be implemented in an order other than those illustrated or described herein. Objects classified by "first" and "second" are usually of a same type, and the number of objects is not limited. For example, there may be one or more first objects. In addition, in this specification and the claims, "and/or" represents at least one of connected objects, and the character "/" generally represents an "or" relationship between associated objects.

It should be noted that the technologies described in embodiments of this application are not limited to a long term evolution (Long Term Evolution, LTE)/LTE-advanced (LTE-Advanced, LTE-A) system, and may also be used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application may be used interchangeably. The technologies described may be applied to both the systems and the radio technologies mentioned above as well as to other systems and radio technologies. A new radio (New Radio, NR) system is described below for an illustration purpose, and the term NR is used in most of the following descriptions, although these technologies may also be used in an application other than an NR system application, for example, a 6th generation (6^{th} Generation, 6G) communication system.

To better understand the technical solutions in embodiments of this application, the following describes a communication scenario and related concepts that may be related to embodiments of this application.

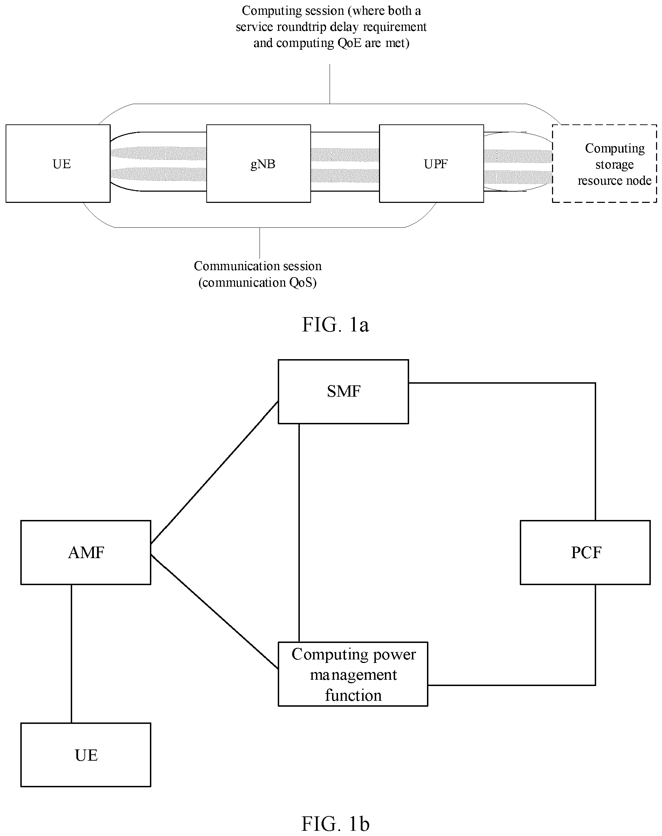

As shown in FIG. la, because a computing power resource needs to be provided for a user, in this embodiment of this application, a computing resource node (or referred to as a computing storage resource node) is added to a network architecture, or another new functional entity is used to provide one or both of a computing resource and a storage resource. Because management and updating of a communication resource and a computing power resource need to be considered, in this embodiment of this application, a computing power management function, a computing power control function, or another entity of a similar function is added to the network architecture. Correspondingly, in a current communication system, a user plane channel of a UE-gNB-UPF and a protocol data unit (Protocol Data Unit, PDU) session are established for the user, to provide a communication service for the user. The established PDU session needs to meet a communication service requirement (Quality of Service, QoS) of the user. In this embodiment of this application, a computing session of a UE-gNB-UPF-computing storage resource node is established for the user to provide a communication computing service for the user, and the computing session needs to meet a computing service requirement of the user, that is, needs to meet both communication QoS and computing QoS of the computing service. There are a plurality of computing bearers in the computing session. Each computing bearer has computing QoS and communication QoS of the computing bearer, and needs to meet both a service roundtrip (roundtrip) delay requirement and a computing service requirement. The computing session may also be referred to as a PDU session during implementation, that is, is implemented in an enhanced PDU session manner. In this case, the computing bearer may also be referred to as a QoS flow or a bearer during implementation. An update message of the computing session may be implemented by using an update message of the PDU session. FIG. 1b shows a network architecture according to an embodiment of this application. Related network elements include: a terminal (User Equipment, UE), an access and mobility management function (Access and Mobility Management Function, AMF), a session management function (Session Management Function, SMF), a computing power management function (which may also be referred to as a computing power management network element), a policy management function (Policy Control Function, PCF), and an application function (Application Function, AF). The computing power management function is a newly added network element for managing and controlling a computing storage resource node. As shown in FIG. 1b, the SMF can manage a user plane function (User Plane Function, UPF), to be specific, allocate a communication resource on a UPF side to the user based on the communication QoS of the user, and allocate a communication resource on a base station side. The computing power management function can manage the computing storage resource node, that is, allocate a resource on a computing storage node side based on the computing QoS of the user.

The terminal may also be referred to as a terminal device or user equipment (User Equipment, UE). The terminal may be a terminal side device, for example, a mobile phone, a tablet personal computer (Tablet Personal Computer), a laptop computer (Laptop Computer) which is also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle-mounted device (Vehicle User Equipment, VUE), a pedestrian terminal (Pedestrian User Equipment, PUE), or a smart home device (a home device having a wireless communication function, for example, a refrigerator, a television, a washing machine, or a furniture). The wearable device includes: a smart watch, a smart band, a smart headset, smart glasses, smart jewelry (a smart bangle, a smart bracelet, a smart ring, a smart necklace, a smart anklet bangle, a smart anklet bracelet, and the like), a smart wrist strap, a smart dress, a game machine, and the like. It should be noted that a specific type of the terminal is not limited in this embodiment of this application.

With reference to the accompanying drawings, the following describes in detail the computing session update method provided in embodiments of this application through some embodiments and application scenarios thereof.

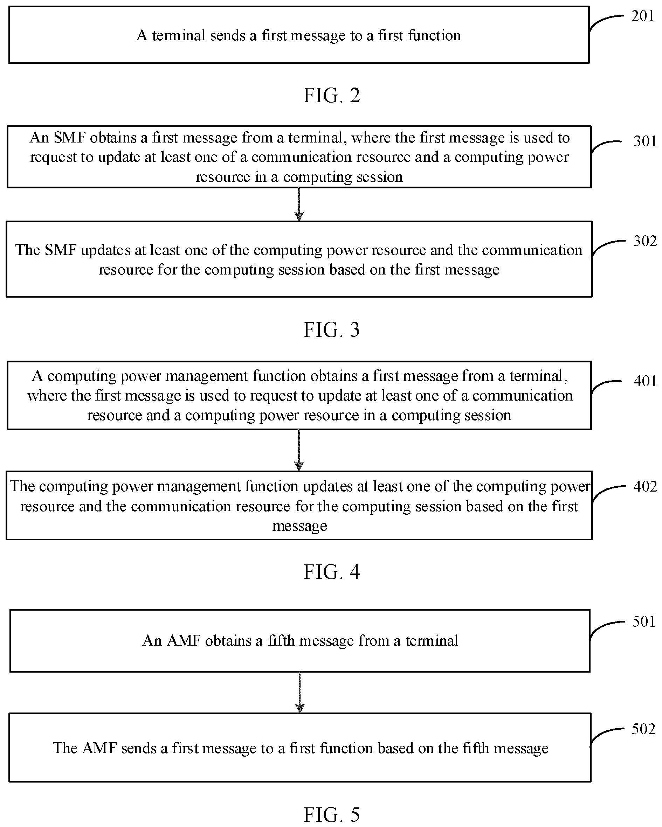

FIG. 2 is a first flowchart of a computing session update method according to an embodiment of this application. The computing session update method is performed by a terminal. As shown in FIG. 2, the computing session update method includes the following step.

Step 201: The terminal sends a first message to a first function, where
the first function is a session management function SMF or a computing power management function, and the first message is used to request to update at least one of a communication resource and a computing power resource in a computing session.

The foregoing computing session is a session that is established by a wireless mobile network to meet a computing service requirement of a user and that includes both a communication resource and a computing power resource. The computing session is a special session between UE and a computing power management/computing power resource node, and the computing session may also provide a computing service requested by the UE for user data while transmitting communication data for the user. There may be one or more computing bearers in the computing session. Each computing bearer has computing QoS and communication QoS of the computing bearer, and needs to meet both a service roundtrip (roundtrip) delay requirement and a computing service requirement. The computing session may also be referred to as a PDU session during implementation, that is, is implemented in an enhanced PDU session manner. User plane data in the computing session is transmitted and carried in the PDU session, that is, transmitted to a computing power resource node through a channel of the PDU session for performing an operation. In this case, the computing bearer may also be referred to as a QoS flow or a bearer during implementation. Optionally, a computing session identity (Identity, ID) is used to identify the computing session, is allocated by the UE, and is sent to a network when the computing session is established. The computing session ID and a PDU session ID are in a one-to-one binding relationship. After determining the binding relationship, the UE sends the computing session ID to the network when the computing session is established (the UE and a computing power control function layer ID).

In this embodiment of this application, when the computing service requirement changes, or the communication resource and/or the computing power resource allocated by the network cannot meet the computing service requirement of the terminal, the terminal sends the first message to the first function, to initiate a computing session update procedure, to request to update the communication resource and/or the computing power resource in the computing session, so that the first function initiates a subsequent communication policy update procedure and/or a subsequent computing power policy update procedure based on the first message sent by the terminal, to implement updating of the communication resource and/or the computing power resource in the computing session, and meet the computing service requirement of the terminal.

It should be noted that data related to the computing session of the terminal may be transmitted to a computing storage resource node, and the computing storage resource node feeds back a computing result after performing the computing. In this way, the terminal can also complete a corresponding computing task when a computing capability is relatively weak, and both a processing delay (a transmission delay and a computing delay) and the computing result (for example, model precision obtained through training of an artificial intelligence (Artificial Intelligence, AI) model can meet a requirement) can meet the service requirement of the user. In addition, costs and power consumption of the terminal can be saved.

In this embodiment of this application, the computing power resource includes at least one of the following: a computing resource and a storage resource.

Optionally, the first message includes at least one of the following: a terminal identifier, a computing service identifier, a PDU session identifier, a computing session identifier, a computing service requirement, a computing service quality of experience (Quality of Experience, QoE) requirement, a data network name (Data Network Name, DNN), and single network slice selection assistance information (Single Network Slice Selection Assistance Information, S-NSSAI).

The terminal identifier may be a subscription permanent identifier (Subscription Permanent Identifier, SUPI), a subscription concealed identifier (Subscription Concealed Identifier, SUCI), an international mobile subscriber identity (International Mobile Subscriber Identity, IMSI), a 5G globally unique temporary identifier (5G Globally Unique Temporary Identifier, 5G-GUTI), a globally unique temporary identifier (Globally Unique Temporary Identifier, GUTI), and the like. The computing service identifier may be an identifier allocated by the terminal due to the computing service. The computing service requirement may include a computing task delay and/or a computing service error rate.

It should be noted that a specific implementation form of the first message may be a PDU session modification request message or a computing power session modification request message.

In this embodiment of this application, the computing service requirement includes at least one of the following: delay information of the computing service, accuracy of the computing service, a computed amount of the computing service, a storage requirement, a type of the computing service, and an internet protocol (Internet Protocol, IP) address of the computing service.

It may be understood that when the first message includes the computing service requirement, the first function can learn, based on the computing service requirement, of information such as the IP address of the computing service, the type of the computing service, and the storage requirement of the computing service that corresponds to the computing session and that the terminal requests to update, so that the communication resource and/or the computing power resource can be updated for a specific computing session, to meet the computing service requirement of the terminal for the computing session.

Optionally, step 201 may include:
The terminal sends the first message to the first function through an AMF.

In this embodiment of this application, the terminal may initiate a computing session modification procedure to the first function through the AMF. For example, the terminal first sends a fifth message to the AMF, and the fifth message triggers the AMF to send the first message to the first function. A specific implementation form of the fifth message may be: a computing bearer modification request message, a computing power session modification request message, a computing session update request message, a computing power modification request message, a PDU session modification request message, or the like.

For example, the fifth message may be the PDU session modification request message. The PDU session modification request message may be an enhancement based on an existing message procedure, and is used to request the network to update and allocate the communication resource for transmitting data of the computing service. In addition, the PDU session modification request message carries information related to the computing service, and is used to request the network to update and allocate the computing power resource simultaneously. Alternatively, the fifth message may be a computing session update request message, and is used to request the network to update and allocate the computing power resource, and the computing session modification request message carries information related to the PDU session, and is used to request the network to update and allocate the communication resource for transmitting data of the computing service. Certainly, the fifth message may alternatively be in another form. Regardless of a form in which the fifth message is implemented, the fifth message is used to request the network to update and allocate the communication resource and/or the computing power resource in the computing session.

Optionally, the fifth message includes at least one of the following: a terminal identifier, a computing service identifier, a protocol data unit PDU session identifier, a computing session identifier, a computing service requirement, a computing service quality of experience QoE requirement, a data network name DNN, and single network slice selection assistance information S-NSSAI.

It should be noted that content of the first message is the same as content of the fifth message, that is, for the content included in the fifth message, the first message also includes at least same content. For example, if the fifth message sent by the terminal to the AMF includes the terminal identifier, the computing service identifier, the computing service requirement, the PDU session identifier, and the computing session identifier, the first message sent by the AMF to the first function also includes the terminal identifier, the computing service identifier, the computing service requirement, the PDU session identifier, and the computing session identifier.

In this embodiment of this application, the first function is an SMF or a computing power management function. For example, if the first function is the SMF, the first message sent by the terminal to the SMF through the AMF may be the PDU session modification request message, and is used to request to update the communication resource in the computing session. Alternatively, the first message may be an enhanced extended PDU session modification request message, and the PDU session modification request message is used to request to update the communication resource and the computing power resource for the computing session. If the first function is the computing power management function, the first message sent by the terminal to the computing power management function through the AMF may be the computing power session modification request message, and is used to request to update the computing power resource for the computing session; or the first message may be an enhanced extended computing power session modification request message, and the computing power session modification request message is used to request to update the communication resource and the computing power resource for the computing session.

Further, after obtaining the first message, the first function initiates a subsequent communication policy update procedure and/or a subsequent computing power policy update procedure based on the first message, to implement updating of the communication resource and/or the computing power resource in the computing session, and meet the computing service requirement of the terminal. For how the first function updates the communication resource and/or the computing power resource in the computing session, refer to specific descriptions in subsequent embodiments. Details are not described in this embodiment.

In this embodiment of this application, after step 201, the method further includes:
The terminal receives a second message that is sent by the first function and that is used to respond to the first message, where the second message is used to indicate the first function to update at least one of the computing power resource and the communication resource for the computing session.

It may be understood that after the first function updates the communication resource and/or the computing power resource in the computing session based on the first message, the first function sends the second message to the terminal, to notify the terminal that the first function updates the computing power resource and/or the communication resource for the computing session, and further notify the terminal that a request for the first message has been accepted and implemented by the network.

Optionally, that the terminal receives a second message that is sent by the first function and that is used to respond to the first message includes:
The terminal receives the second message that is sent by the first function through the AMF and that is used to respond to the first message.

It may be understood that the terminal can send the first message to the first function through the AMF. Similarly, the second message that is used by the first function to respond to the first message may also be sent to the terminal through the AMF. For example, if the first function is the SMF, the SMF may send a PDU session modification response message to the AMF, to trigger the AMF to send the second message to the terminal. If the first function is the computing power management function, the computing power management function may send a computing power session modification response message to the AMF, to trigger the AMF to send the second message to the terminal.

An implementation form of the second message may be the computing power session modification response message, the PDU session modification response message, or the like.

In this embodiment of this application, the terminal can send the first message to the first function to initiate the computing session update procedure, to request to update the communication resource and/or the computing power resource in the computing session, and finally implement updating of the communication resource and/or the computing power resource in the computing session, to meet the computing service requirement of the terminal. FIG. 3 is a second flowchart of a computing session update method according to an embodiment of this application. The computing session update method is performed by an SMF. As shown in FIG. 3, the computing session update method includes the following steps.

Step 301: The SMF obtains a first message from a terminal, where the first message is used to request to update at least one of a communication resource and a computing power resource in a computing session.

Step 302: The SMF updates at least one of the computing power resource and the communication resource for the computing session based on the first message.

It should be noted that the SMF in this embodiment of this application is also a specific form of the first function in the foregoing embodiment in FIG. 2.

In this embodiment of this application, the SMF obtains the first message from the terminal. For example, if the first message may be a PDU session modification request message, and is used to request to update the communication resource in the computing session, the SMF may update the communication resource for the computing session based on the message. Alternatively, if the first message may be an enhanced extended PDU session modification request message, and the PDU session modification request message is used to request to update the communication resource and the computing power resource for the computing session, the SMF may update the communication resource and the computing power resource in the computing session based on the message. Alternatively, if the first message may be a computing session modification request message, and is used to request to update the communication resource and the computing power resource for the computing session, the SMF may update the communication resource for the computing session based on the message.

The computing power resource includes at least one of the following: a computing resource and a storage resource.

Optionally, the first message includes at least one of the following: a terminal identifier, a computing service identifier, a PDU session identifier, a computing session identifier, a computing service requirement, a computing service QoE requirement, a DNN, and S-NSSAI.

The computing service requirement includes at least one of the following: delay information of a computing service, accuracy of the computing service, a computed amount of the computing service, a storage requirement, a type of the computing service, and an IP address of the computing service.

In this embodiment of this application, step 301 may include:
The SMF obtains the first message sent by the terminal through an AMF.

For example, the terminal first sends a fourth message to the AMF, and the fourth message triggers the AMF to send the first message to the SMF. A specific implementation form of the fourth message may be: a computing bearer modification request message, a computing power session modification request message, a computing session update request message, a computing power modification request message, a PDU session modification request message, or the like.

In this embodiment of this application, step 302 may include:
The SMF obtains at least one of an updated computing power management policy and an updated communication management policy based on the first message.

When obtaining the updated communication management policy, the SMF determines updated communication QoS information based on the obtained updated communication management policy, and updates and allocates the communication resource in the computing session based on the updated communication QoS information.

When obtaining the updated computing power management policy, the SMF sends the updated computing power management policy to a computing power management function, to obtain computing power resource allocation information sent by the computing power management function.

Specifically, the first message is used to request to update the computing power resource and/or the communication resource in the computing session. After obtaining the first message, the SMF may request the updated computing power management policy and/or the updated communication management policy from a PCF, and obtain the updated computing power management policy and/or the updated communication management policy that are/is fed back by the PCF. Further, the SMF can determine updated computing power QoS information and/or the updated communication QoS information based on at least one of the updated computing power management policy and the updated communication management policy, so that the SMF can update the computing power resource and/or the communication resource for the computing session.

In an implementation, the SMF may send a communication management policy modification request to the PCF, and obtain the updated communication management policy fed back by the PCF. The SMF may determine the updated communication QoS information based on the updated communication management policy, and update and allocate the communication resource in the computing session based on the updated communication QoS information. Alternatively, in another implementation, the communication management policy modification request sent by the SMF to the PCF further carries a computing service requirement, and then the PCF feeds back the updated communication management policy and the updated computing power management policy based on the communication management policy modification request to the SMF. In this case, the SMF determines the updated communication QoS information based on the updated communication management policy, and updates and allocates the communication resource in the computing session based on the updated communication QoS information. In addition, the SMF sends the obtained updated computing power management policy to the computing power management function, so that the computing power management function determines the updated computing power QoS information based on the updated computing power management policy, and updates and allocates the computing power resource in the computing session based on the updated computing power QoS information. After completing updating and allocation of the computing power resource, the computing power management function sends the computing power resource allocation information to the SMF, to notify the SMF of a computing power allocation status of the computing power management function, so that the SMF can further feed back, to the terminal, a second message used to respond to the first message.

Optionally, that when obtaining the updated communication management policy, the SMF determines updated communication QoS information based on the obtained updated communication management policy, and updates and allocates the communication resource in the computing session based on the updated communication QoS information includes:
When obtaining the updated communication management policy, the SMF determines the updated communication QoS information based on the obtained updated communication management policy.

The SMF sends an updated N4 interface rule to a user plane function UPF, so that the UPF updates the communication resource in the computing session based on the updated N4 interface rule, where the updated N4 interface rule is obtained based on the updated communication QoS information.

Specifically, when the SMF obtains the updated communication management policy, the SMF determines the updated communication QoS information based on the obtained updated communication management policy, obtains the updated N4 interface rule based on the updated communication QoS information, and sends the updated N4 interface rule to the UPF, so that the UPF can update the corresponding communication resource in the computing session based on the updated N4 interface rule.

It should be noted that after determining the updated communication QoS information, the SMF can further transfer the updated communication QoS information to a base station and the terminal.

Optionally, that the SMF obtains at least one of an updated computing power management policy and an updated communication management policy includes any one of the following:
The SMF sends a third message to the PCF, and obtains at least one of the updated computing power management policy and the updated communication management policy that are sent by the PCF and that are in response to the third message, where the third message includes at least one of a communication policy modification request and a computing policy modification request.

The SMF obtains an updated communication management policy sent by the computing power management function.

For example, in an implementation, the SMF sends the third message to the PCF based on the first message, where the third message is used to request at least one of the updated computing power management policy and the updated communication management policy. A specific implementation form of the third message may be a communication management policy modification request message or an enhanced extended communication management policy modification request message, and the enhanced extended communication management policy modification request message further carries a computing service requirement. Further, the PCF sends at least one of the updated computing power management policy and the updated communication management policy to the SMF based on the third message.

Alternatively, in another implementation, the SMF does not directly obtain the updated communication management policy from the PCF, but obtains the updated communication management policy from the computing power management function. In this implementation, the computing power management function requests the updated computing power management policy and the updated communication management policy from the PCF. After obtaining the updated computing power management policy and the updated communication management policy that are sent by the PCF, the computing power management function sends the updated communication management policy to the SMF, so that the SMF can determine the updated communication QoS information based on the updated communication management policy, and update the communication resource in the computing session based on the updated communication QoS information.

Optionally, when the third message includes the computing power management policy modification request, the SMF is further configured to determine the computing power management function corresponding to the computing session. For example, the SMF requests the updated computing power management policy and the updated communication management policy from the PCF by using the third message. After obtaining the updated computing power management policy fed back by the PCF, the SMF needs to send the updated computing power management policy to the corresponding computing power management function. In this implementation, the SMF further needs to determine the computing power management function corresponding to the computing session, to perform information transmission with the corresponding computing power management function.

In this embodiment of this application, after step 302, the method further includes:
The SMF sends a second message to the terminal, where the second message is used to indicate at least one of the computing power resource and the communication resource that are updated by the SMF for the computing session.

The second message is a response to the first message sent by the terminal, and the second message is used to indicate at least one of the computing power resource and the communication resource that are updated by the SMF for the computing session, to notify the terminal that the computing power resource and/or the communication resource that are/is updated by the SMF for the computing session, and further notify the terminal that a request for the first message has been accepted and implemented by a network.

Optionally, before that the SMF sends a second message to the terminal, the method further includes:
The SMF receives the computing power resource allocation information sent by the computing power management function.

In this implementation, after updating the computing power resource in the computing session, the computing power management function does not directly send the second message used to respond to the first message, but sends the computing power resource allocation information of the computing power management function to the SMF, to send the second message to the terminal through the SMF.

Optionally, that the SMF sends a second message to the terminal includes:
The SMF sends the second message to the terminal through an AMF.

It may be understood that the terminal can send the first message to the SMF through the AMF. Similarly, the second message that is used by the SMF to respond to the first message may also be sent to the terminal through the AMF. For example, the SMF may send a PDU session modification response message to the AMF, to trigger the AMF to send the second message to the terminal. An implementation form of the second message may be a computing bearer modification response message, a computing session modification response message, a computing session update response message, a PDU session modification response message, or the like.

In this embodiment of this application, the SMF obtains the first message from the terminal, and can update at least one of the computing power resource and the communication resource for the computing session based on the first message, to update and allocate the communication resource and/or the computing power resource in the computing session in the network, and meet the computing service requirement of the terminal.

FIG. 4 is a third flowchart of a computing session update method according to an embodiment of this application. The computing session update method is performed by a computing power management function. As shown in FIG. 4, the computing session update method includes the following steps.

Step 401: The computing power management function obtains a first message from a terminal, where the first message is used to request to update at least one of a communication resource and a computing power resource in a computing session.

Step 402: The computing power management function updates at least one of the computing power resource and the communication resource for the computing session based on the first message.

It should be noted that the computing power management function in this embodiment of this application is another specific form of the first function in the foregoing embodiment in FIG. 2. In this embodiment of this application, the computing power management function obtains the first message from the terminal. For example, if the first message may be a computing session modification request message, and is used to request to update the computing power resource in the computing session, the computing power management function may update the computing power resource for the computing session based on the message. Alternatively, if the first message may be an enhanced extended computing session modification request message, and the computing session modification request message is used to request to update the communication resource and the computing power resource for the computing session, the computing power management function may update the communication resource and the computing power resource in the computing session based on the message. Alternatively, if the first message may be an enhanced extended PDU session modification request message, and the PDU session modification request message is used to request to update the communication resource and the computing power resource for the computing session, the computing power management function may update the communication resource and the computing power resource in the computing session based on the message.

The computing power resource includes at least one of the following: a computing resource and a storage resource.

Optionally, the first message includes at least one of the following: a terminal identifier, a computing service identifier, a PDU session identifier, a computing session identifier, a computing service requirement, a computing service QoE requirement, a DNN, and S-NSSAI. The computing service requirement includes at least one of the following: delay information of a computing service, accuracy of the computing service, a computed amount of the computing service, a storage requirement, a type of the computing service, and an IP address of the computing service.

In this embodiment of this application, step 401 may include:
The computing power management function obtains the first message sent by the terminal through an AMF.

For example, the terminal first sends a fourth message to the AMF, and the fourth message triggers the AMF to send the first message to the computing power management function. A specific implementation form of the fourth message may be: a computing bearer modification request message, a computing power session modification request message, a computing session update request message, a computing power modification request message, a PDU session modification request message, or the like.

In this embodiment of this application, step 402 may include any one of the following:
The computing power management function obtains at least one of an updated computing power management policy and an updated communication management policy based on the first message.

When obtaining the updated computing power management policy, the computing power management function determines updated computing power QoS information based on the updated computing power management policy, and updates and allocates the computing power resource in the computing session based on the determined updated computing power QoS information.

When obtaining the updated communication management policy, the computing power management function sends the updated communication management policy to an SMF, and obtains communication resource allocation information sent by the SMF.

Specifically, the first message is used to request to update the computing power resource and/or the communication resource in the computing session. After obtaining the first message, the computing power management function may request the updated computing power management policy and/or the updated communication management policy from a PCF, and obtain the updated computing power management policy and/or the updated communication management policy that are/is fed back by the PCF. Further, the computing power management function can determine the updated computing power QoS information and/or updated communication QoS information based on at least one of the updated computing power management policy and the updated communication management policy, so that the computing power management function can update the computing power resource and/or the communication resource for the computing session.

For example, in an implementation, the computing power management function may send a computing power management policy modification request to the PCF, and obtain the updated computing power management policy fed back by the PCF. The computing power management function may determine the updated computing power QoS information based on the updated computing power management policy, and update and allocate the computing power resource in the computing session based on the updated computing power QoS information. Alternatively, in another implementation, the computing power management policy modification request sent by the computing power management function to the PCF further carries a PDU session service requirement, and then the PCF feeds back the updated computing power management policy and the updated communication management policy based on the computing power management policy modification request to the computing power management function. In this case, the computing power management function determines the updated computing power QoS information based on the updated computing power management policy, and updates and allocates the computing power resource in the computing session based on the updated computing power QoS information. In addition, the computing power management function sends the obtained updated communication management policy to the SMF, so that the SMF determines the updated communication QoS information based on the updated communication management policy, and updates and allocates the communication resource in the computing session based on the updated communication QoS information. After completing updating and allocation of the communication resource, the SMF sends the communication resource allocation information to the computing power management function, to notify the computing power management function of a communication resource allocation status of the SMF, so that the computing power management function can further feed back, to the terminal, a second message used to respond to the first message.

Optionally, that the computing power management function obtains at least one of an updated computing power management policy and an updated communication management policy includes any one of the following:
The computing power management function sends a fourth message to a PCF, and obtains at least one of the updated computing power management policy and the updated communication management policy that are sent by the PCF and that are in response to the fourth message, where the fourth message includes at least one of a communication policy modification request and a computing policy modification request.

The computing power management function obtains an updated computing power management policy sent by the SMF.

For example, in an implementation, the computing power management function sends the fourth message to the PCF based on the first message, where the fourth message is used to request at least one of the updated computing power management policy and the updated communication management policy. A specific implementation form of the fourth message may be a computing power management policy modification request message or an enhanced extended computing power management policy modification request message, and the enhanced extended computing power management policy modification request message further carries a communication management policy modification request message. Further, the PCF sends at least one of the updated computing power management policy and the updated communication management policy to the computing power management function based on the fourth message.

Alternatively, in another implementation, the computing power management function does not directly obtain the updated computing power management policy from the PCF, but obtains the updated communication management policy from SMF. In this implementation, the SMF requests the updated computing power management policy and the updated communication management policy from the PCF. After obtaining the updated computing power management policy and the updated communication management policy that are sent by the PCF, the SMF sends the updated computing power management policy to the computing power management function, so that the computing power management function can determine the updated computing power QoS information based on the updated computing power management policy, and update the computing power resource in the computing session based on the updated computing power QoS information.

Optionally, that when obtaining the updated computing power management policy, the computing power management function determines updated computing power QoS information based on the updated computing power management policy, and updates and allocates the computing power resource in the computing session based on the determined updated computing power QoS information includes:
The computing power management function determines the updated computing power QoS information based on the obtained updated computing power management policy.

The computing power management function sends the updated computing power QoS information to a computing storage resource node, so that the computing storage resource node updates the computing power resource in the computing session based on the updated computing power QoS information.

In this embodiment of this application, when the computing power management function obtains the updated computing power management policy, the computing power management function determines the updated computing power QoS information based on the updated computing power management policy, and sends the updated computing power QoS information to the selected computing storage resource node, so that the computing storage resource node can update the computing power resource in the computing session based on the updated computing power QoS information.

It should be noted that a computing capability of the computing storage resource node selected by the computing power management function can meet a computing resource requirement and a storage resource requirement in the computing power QoS information. For example, the computing resource requirement may be that at least 100 units of graphics processing unit (Graphics Processing Unit, GPU) resources are required, and a specific algorithm (such as a deep neural network (Deep Neural Networks, DNN)) or the like is required to be supported. The storage resource requirement may be that, for example, 100 units of storage resources are required. This embodiment of this application does not provide excessive examples.

Further, after the computing power management function sends the updated computing power QoS information to a computing storage resource node, the method further includes:
The computing power management function obtains a feedback message sent by the computing storage resource node, where the feedback message includes at least one of the following: a computing resource internet protocol IP address, a storage resource IP address, a computing resource size, and a storage resource size.

It may be understood that, after updating the computing power resource in the computing session based on the updated computing power QoS information, the computing storage resource node can obtain information such as the computing resource IP address, the computing resource size, the storage resource IP address, and the storage resource size based on the computing power resource in the computing session after update, and feed back these pieces of information to the computing power management function, so that the computing power management function can learn of a status of the computing storage resource node. Optionally, the computing power QoS information includes at least one of the following: computing power, a sample data amount, a storage resource, a computing delay, a computing correctness rate, and a computing speed.

In this embodiment of this application, after step 402, the method may further include:
The computing power management function sends a second message to the terminal, where the second message is used to indicate at least one of the computing power resource and the communication resource that are updated by the computing power management function for the computing session.

The second message is a response to the first message sent by the terminal, and the second message is used to indicate at least one of the computing power resource and the communication resource that are updated by the computing power management function for the computing session, to notify the terminal of the computing power resource and the communication resource that are updated by the computing power management function for the computing session. Optionally, before that the computing power management function sends a second message to the terminal, the method further includes:
The computing power management function receives the communication resource allocation information sent by the SMF.

In this implementation, after updating the communication resource in the computing session, the SMF does not directly send, to the terminal, the second message used to respond to the first message, but sends the communication resource allocation information of the SMF to the computing power management function, to send the second message to the terminal through the computing power management function, and notify the terminal that the SMF updates the communication resource for the computing session.

Optionally, that the computing power management function sends a second message to the terminal includes:
The computing power management function sends the second message to the terminal through an AMF.

It may be understood that the terminal can send the first message to the SMF through the AMF. Similarly, the second message that is used by the computing power management function to respond to the first message may also be sent to the terminal through the AMF. For example, the computing power management function may send a computing session modification response message to the AMF, to trigger the AMF to send the second message to the terminal. An implementation form of the second message may be a computing bearer modification response message, a computing session modification response message, a computing session update response message, a PDU session modification response message, or the like.

In this embodiment of this application, the computing power management function obtains the first message from the terminal, and can update at least one of the computing power resource and the communication resource for the computing session based on the first message, to update and allocate the communication resource and/or the computing power resource in the computing session in a network, and meet the computing service requirement of the terminal. FIG. 5 is a fourth flowchart of a computing session update method according to an embodiment of this application. The computing session update method is performed by an AMF. As shown in FIG. 5, the computing session update method includes the following steps.

Step 501: The AMF obtains a fifth message from a terminal.

Step 502: The AMF sends a first message to a first function based on the fifth message, where
the first function is a session management function SMF or a computing power management function, and the first message is used to request to update at least one of a communication resource and a computing power resource in a computing session.

In this embodiment of this application, the AMF obtains the fifth message sent by the terminal, where the fifth message is used to request to update at least one of the communication resource and the computing power resource in the computing session. Further, the fifth message triggers the AMF to send the first message to the first function, to request to update at least one of the communication resource and the computing power resource in the computing session, so that the first function initiates a subsequent communication policy update procedure and/or a subsequent computing power policy update procedure based on the first message sent by the terminal, to implement updating of the communication resource and/or the computing power resource in the computing session, and meet a computing service requirement of the terminal. Optionally, a specific implementation of the fifth message may be: a computing bearer modification request message, a computing power session modification request message, a computing session update request message, a computing power modification request message, a PDU session modification request message, or the like.

For example, the fifth message may be the PDU session modification request message. The PDU session modification request message may be an enhancement based on an existing message procedure, and is used to request a network to update and allocate the communication resource for transmitting data of a computing service. In addition, the PDU session modification request message carries information related to the computing service, and is used to request the network to update and allocate the computing power resource simultaneously. Alternatively, the fifth message may be a computing session update request message, and is used to request the network to update and allocate the computing power resource, and the computing session modification request message carries information related to the PDU session, and is used to request the network to update and allocate the communication resource for transmitting data of the computing service. Certainly, the fifth message may alternatively be in another form. Regardless of a form in which the fifth message is implemented, the fifth message is used to request the network to update and allocate the communication resource and/or the computing power resource in the computing session.

Optionally, the fifth message includes at least one of the following: a terminal identifier, a computing service identifier, a PDU session identifier, a computing session identifier, a computing service requirement, a computing service QoE requirement, a DNN, and S-NSSAI. It should be noted that content of the first message is the same as content of the fifth message, that is, for the content included in the fifth message, the first message also includes same content. The computing service requirement includes at least one of the following: delay information of the computing service, accuracy of the computing service, a computed amount of the computing service, a storage requirement, a type of the computing service, and an IP address of the computing service.

In this embodiment of this application, after step 502, the method further includes:
The AMF obtains a second message sent by the first function, where the second message is used to indicate at least one of the computing power resource and the communication resource that are updated by the first function for the computing session.

It may be understood that after the first function updates the communication resource and/or the computing power resource in the computing session based on the first message, the first function sends the second message to the AMF to respond to the first message, to notify, based on the second message, the AMF that the first function updates the computing power resource and/or the communication resource for the computing session. An implementation form of the second message may be a computing power session modification response message, a PDU session modification response message, or the like.

Further, after the AMF obtains a second message sent by the first function, the method further includes:
The AMF sends, to the terminal, a sixth message used to respond to the fifth message, where the sixth message is used to indicate at least one of the computing power resource and the communication resource that are updated by the first function for the computing session.

It may be understood that, after receiving the second message sent by the first function, the AMF sends the sixth message to the terminal based on the second message, to notify the terminal that the first function updates the computing power resource and/or the communication resource for the computing session. A specific implementation form of the sixth message may be a computing bearer modification response message, a computing session update response message, a computing power session modification response message, a PDU session modification response message, or the like.

Optionally, the sixth message includes at least one of the following: a PDU session identifier, a computing session identifier, communication resource update information, a communication quality of service QoS rule, computing power resource update information, and a computing power QoS rule. It should be noted that content of the sixth message is the same as content of the second message, that is, for the content included in the second message, the sixth message also includes at least same content.

The computing power resource update information includes at least one of the following: a computing resource internet protocol IP address, a storage resource IP address, a computing resource size, and a storage resource size.

In this embodiment of this application, the AMF can obtain the fifth message from the terminal, send the first message to the first function based on the fifth message, to request the first function to update the communication resource and/or the computing power resource in the computing session, and finally implement updating of the communication resource and/or the computing power resource in the computing session, to meet the computing service requirement of the terminal.

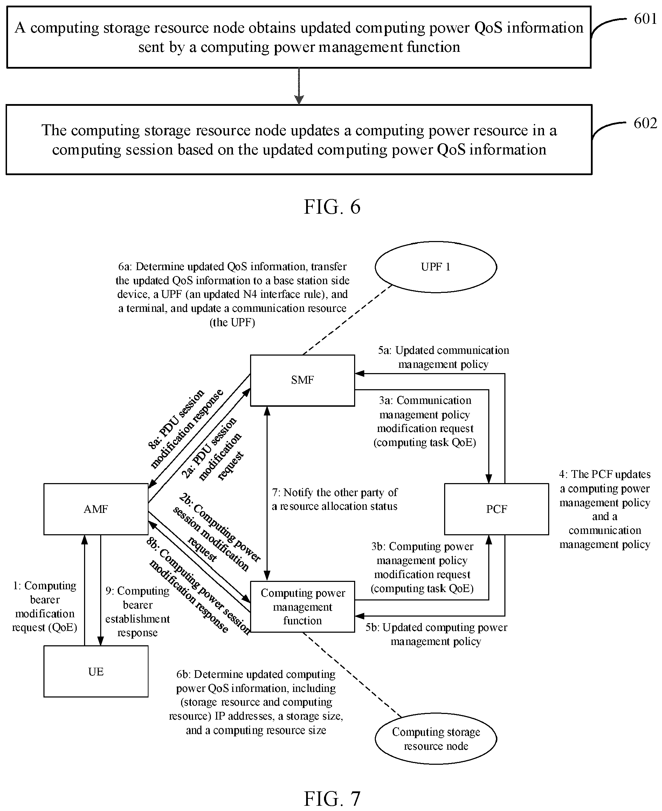

FIG. 6 is a fifth flowchart of a computing session update method according to an embodiment of this application. The computing session update method is performed by a computing storage resource node. As shown in FIG. 6, the computing session update method includes the following steps.

Step 601: The computing storage resource node obtains updated computing power QoS information sent by a computing power management function.

Step 602: The computing storage resource node updates a computing power resource in a computing session based on the updated computing power QoS information, where
the updated computing power QoS information is determined by the computing power management function based on an updated computing power management policy obtained by using a first message, and the first message is used to request to update at least one of a communication resource and the computing power resource in the computing session.

In this embodiment of this application, the computing power management function can obtain the updated computing power management policy based on the first message, and determine the updated computing power QoS information based on the updated computing power management policy, and the computing power management function sends the updated computing power QoS information to the computing storage resource node, so that the computing storage resource node can update the computing power resource in the computing session based on the updated computing power QoS information. For a specific implementation in which the computing power management function determines the updated computing power QoS information, refer to the foregoing descriptions in the embodiment of the computing power management function. Details are not described in this embodiment again.

Optionally, after step 602, the method further includes:
The computing storage resource node sends a feedback message to the computing power management function, where the feedback message includes at least one of the following: a computing resource internet protocol IP address, a storage resource IP address, a computing resource size, and a storage resource size.

Specifically, after updating the computing power resource in the computing session based on the updated computing power QoS information, the computing storage resource node can obtain information such as the computing resource IP address, the computing resource size, the storage resource IP address, and the storage resource size based on the computing power resource in the computing session after update, and feed back these pieces of information to the computing power management function, so that the computing power management function can learn of a status of the computing storage resource node.

In this embodiment of this application, data related to the computing session may also be transmitted to the computing storage resource node, and the computing storage resource node feeds back a computing result after performing the computing. In this way, when a computing capability is relatively weak, the terminal can also complete a corresponding computing task, and costs and power consumption of the terminal are reduced.

To better understand the computing session update method provided in this application, the following specifically describes the computing session update method provided in this application with reference to specific communication scenarios.

FIG. 7 is a sixth flowchart of a computing session update method according to an embodiment of this application. As shown in FIG. 7, the computing session update method includes the following specific steps.

Step 1: UE (a terminal) sends a computing bearer modification request message (namely, a fifth message) to an AMF, where the computing bearer modification request message is used to request a network to update and allocate a computing power resource and/or a communication resource for a computing session of the UE.

Step 2a: The AMF sends a PDU session modification request message (namely, a first message) to an SMF. It should be noted that, if the UE initiates the computing bearer modification request message but not the PDU session modification request message in step 1, the AMF herein needs to filter out PDU session information (for example, a PDU session ID) in the computing bearer modification request message, and then the AMF triggers the PDU session modification request message to the SMF, where the PDU session modification request message may include the PDU session ID and a UE ID, and content included in the PDU session modification request message is the same as content included in the first message in the foregoing embodiments. Step 2b: The AMF sends a computing power session modification request message (namely, the first message) to a computing power management function, where the computing power session modification request message is used to request to allocate the corresponding computing power resource for the computing session of the UE, and the computing power session modification request message may include the UE ID and a computing service ID, and optionally may further include at least one of a PDU session identifier, a computing service requirement, a computing service QoE requirement, a DNN, and S-NSSAI (same as the content included in the first message in the foregoing embodiments).

Step 3a: The SMF sends a communication management policy modification request message (namely, a third message) to a PCF, where the communication management policy modification request message is used to request to update a communication management policy applicable to a PDU session, and the communication management policy modification request message includes at least one of the UE ID, a PDU session identifier, a computing service ID, a computing service requirement, a computing service QoE requirement, a DNN, and S-NSSAI. Step 3b: The computing power management function sends a computing power management policy modification request message (namely, a fourth message) to the PCF, where the computing power management policy modification request message is used to request to update a computing power management policy in the computing session, and the computing power management policy modification request message includes at least one of the UE ID, a PDU session identifier, a computing service ID, a computing service requirement, a computing service QoE requirement, DNN, and S-NSSAI.

Step 4: The PCF updates the computing power management policy and the communication management policy, where the PCF needs to ensure that a sum of a delay in the allocated communication management policy plus a delay in the computing power management policy does not exceed a total delay of a computing service requirement that the UE requests to update; and the PCF needs to ensure that data transmission accuracy, in the allocated communication management policy, multiplied by computing accuracy in the computing power management policy is not lower than accuracy of the computing service requirement that the UE requests to update.

Step 5a: The PCF sends an updated communication management policy to the SMF.

Step 5b: The PCF sends an updated computing power management policy to the computing power management function. It should be noted that both step 5a and step 5b may be performed, or only step 5a or step 5b may be performed.

Step 6a: The SMF determines updated communication QoS information based on the obtained updated communication management policy, and transfers the updated communication QoS information to a base station side device, a UPF (an updated N4 interface rule), and the terminal. Specifically, the SMF triggers a PDU session modification procedure based on a communication management policy update procedure, for example, modifies the corresponding N4 interface rule, or establishes or modifies an N3 tunnel, to trigger a QoS flow establishment and modification procedure.

Step 6b: The computing power management function determines updated computing power QoS information based on the obtained updated computing power management policy, and sends the updated computing power QoS information to a computing storage resource node. The computing power management function selects the corresponding computing storage resource node based on the updated computing power QoS information, and the selected computing storage resource node has a computing function and a storage function. The two functions may be jointly deployed on a same node, or may be independently deployed on different nodes. A computing capability of the selected computing storage resource node meets a computing resource requirement and a storage resource requirement in the computing power management policy.

Step 7: The SMF notifies the computing power management function of a communication resource allocation status of the SMF, and the computing power management function notifies the SMF of a computing power resource allocation status of the computing power management function. For example, the SMF may notify the computing power management function of a specific UPF selected by the SMF, and the UPF is used by the computing power management function to measure a data transmission delay between each computing storage resource node under the computing power management function and the UPF, so that the computing power management function is used to estimate balance space of the computing delay, and one computing storage resource node that can meet a remaining delay requirement is finally selected. For example, the SMF notifies the computing power management function that a UPF 1 is selected, and a corresponding RAN delay and a CN delay are respectively 2 ms and 3 ms. In the computing power management function, there are three available computing storage resource nodes, and transmission delays between the three computing storage resource nodes and the UPF 1 are respectively 1 ms, 2ms and 3ms. Delays of completing a computing task by the three computing storage resource nodes are 3 ms, 5 ms, and 8 ms. Therefore, total corresponding delays are 9 ms, 12 ms, and 16 ms. If a total delay requirement of a computing task requirement is 10 ms, the computing power management network element can select only the first computing storage resource node to carry a subsequent computing task.

Step 8a: The SMF sends a PDU session modification response message (namely, a second message) to the AMF, where the PDU session modification response message is used to notify the AMF that communication resource modification (or updating) of the computing session is completed.

Step 8b: The computing power management function sends a computing power session modification response message (namely, the second message) to the AMF, where the computing power session modification response message is used to notify the AMF that computing power resource modification (or updating) of the computing session is completed.

Step 9: The AMF sends a computing bearer modification response message (namely, a sixth message) to the UE, where the computing bearer modification response message is used to notify the UE that the communication resource and the computing power resource in the computing session have been modified.

It should be noted that implementation of steps and related concepts in this implementation may be described with reference to the foregoing embodiments in FIG. 2 to FIG. 6, and a technical effect same as that in the foregoing embodiments can be achieved. Details are not described herein again.

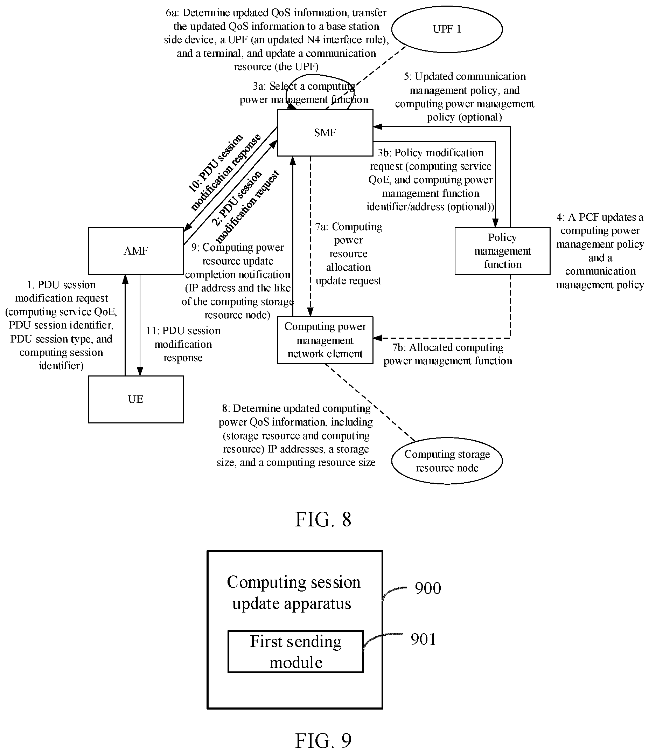

FIG. 8 is a seventh flowchart of a computing session update method according to an embodiment of this application. As shown in FIG. 8, the computing session update method includes the following specific steps.

Step 1: UE (a terminal) sends a PDU session modification request message (namely, a fifth message) to an AMF, where the PDU session modification request message is used to request a network to update and allocate a computing power resource and/or a communication resource for a computing session of the UE, and the PDU session modification request message includes at least one of a UE ID, a computing service identifier, a PDU session identifier, a computing session identifier, a computing service requirement, a computing service QoE requirement, a DNN, and S-NSSAI.

Step 2: The AMF sends a PDU session modification request message (namely, a first message) to an SMF, where the PDU session modification request message includes at least one of a UE ID, a computing service identifier, a PDU session identifier, a computing session identifier, a computing service requirement, a computing service QoE requirement, a DNN, and S-NSSAI. Step 3a: The SMF selects a computing power management function for the corresponding computing session based on the PDU session modification request message.

Step 3b: The SMF sends a policy modification request message (the foregoing third message) to a PCF, where the policy modification request message is used to request to update a dynamic policy applicable to the computing session, and the communication management policy modification request message includes at least one of a UE ID, a PDU session identifier, a computing session identifier, a computing service ID, a computing service requirement, a computing service QoE requirement, a DNN, and S-NSSAI.

Step 4: The PCF updates a computing power management policy and a communication management policy that correspond to the computing session.

Step 5: The PCF sends the updated computing power management policy and the updated communication management policy to the SMF.

Step 6: The SMF determines updated communication QoS information based on the obtained updated communication management policy, and transfers the updated communication QoS information to a base station side device, a UPF (an updated N4 interface rule), and the terminal. Specifically, the SMF triggers a PDU session modification procedure based on a communication management policy update procedure, for example, modifies the corresponding N4 interface rule, or establishes or modifies an N3 tunnel, to trigger a QoS flow establishment and modification procedure.

Step 7a: The SMF initiates a computing power resource allocation update request message to the selected computing power management function, where the message carries the updated computing power management policy, and may further carry computing session ID information, and the computing session ID information may be generated by the UE and is sent to the SMF through step 1 and step 2, or may be generated by the SMF for the computing session of the UE.

Step 7b: The PCF sends the updated computing power management policy to the computing power management function, where the PCF may address the computing power management function by using an identifier or address information, of the computing power management function, that is carried in step 3, or the PCF determines the computing power management function based on context of the computing session (or a PDU session) of the SMF in step 3, and then sends the updated computing power management policy to computing power management function.

It should be noted that either of step 7a and step 7b is performed.

Step 8: The computing power management function determines updated computing power QoS information based on the obtained updated computing power management policy, and sends the updated computing power QoS information to a computing storage resource node. For details, refer to step 6b in the foregoing embodiment in FIG. 7.

Step 9: The computing power management function sends a notification message to the SMF, where the notification message is used to notify the SMF of a computing power resource allocation status, and the notification message includes an allocated IP address, identification information, or the like of the computing storage resource node.

Step 10: The SMF sends a PDU session modification response message (namely, a second message) to the AMF, where the PDU session modification response message is used to notify the AMF that communication resource modification (or updating) of the computing session is completed.

Step 11: The AMF sends a PDU session modification response message (namely, a sixth message) to the UE, where the PDU session modification response message is used to notify the UE that the communication resource and the computing power resource of the computing session have been modified.

It should be noted that implementation of steps and related concepts in this implementation may be described with reference to the foregoing embodiments in FIG. 2 to FIG. 6, and a technical effect same as that in the foregoing embodiments can be achieved. Details are not described herein again.

It should be noted that the computing session update method provided in embodiments of this application can be performed by a computing session update apparatus or a control module, in the computing session update apparatus, that is configured to perform the computing session update method. In embodiments of this application, the computing session update apparatus provided in embodiments of this application is described by using an example in which the computing session update method is performed by the computing session update apparatus. FIG. 9 is a first structural diagram of a computing session update apparatus according to an embodiment of this application. As shown in FIG. 9, the computing session update apparatus 900 includes:
a first sending module 901, configured to send a first message to a first function, where
the first function is a session management function SMF or a computing power management function, and the first message is used to request to update at least one of a communication resource and a computing power resource in a computing session. Optionally, the first sending module 901 is further configured to:
send the first message to the first function through an access and mobility management function AMF.

Optionally, the apparatus further includes a first receiving module, configured to:
receive a second message that is sent by the first function and that is used to respond to the first message, where the second message is used to indicate at least one of the computing power resource and the communication resource that are updated by the first function for the computing session.

Optionally, the first receiving module is further configured to:
receive the second message that is sent by the first function through the AMF and that is used to respond to the first message.

Optionally, the second message includes at least one of the following: a protocol data unit PDU session identifier, a computing session identifier, communication resource update information, a communication quality of service QoS rule, computing power resource update information, and a computing power QoS rule.

Optionally, the computing power resource update information includes at least one of the following: a computing resource internet protocol IP address, a storage resource IP address, a computing resource size, and a storage resource size.

Optionally, the first message includes at least one of the following: a terminal identifier, a computing service identifier, a PDU session identifier, a computing session identifier, a computing service requirement, a computing service quality of experience QoE requirement, a data network name DNN, and single network slice selection assistance information S-NSSAI. Optionally, the computing service requirement includes at least one of the following: delay information of a computing service, accuracy of the computing service, a computed amount of the computing service, a storage requirement, a type of the computing service, and an IP address of the computing service.

Optionally, the computing power resource includes at least one of the following: a computing resource and a storage resource.

The computing session update apparatus in this embodiment of this application may be an apparatus or an apparatus or electronic device having an operating system, or may be a component, an integrated circuit, or a chip in a terminal. The apparatus or electronic device may be a mobile terminal, or a non-mobile terminal. For example, the mobile terminal may include but is not limited to the types of the terminal listed above, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

It should be noted that the computing session update apparatus provided in this embodiment of this application can implement processes implemented by the terminal in the method embodiment in FIG. 2, and achieve a same technical effect. To avoid repetition, details are not described herein again.

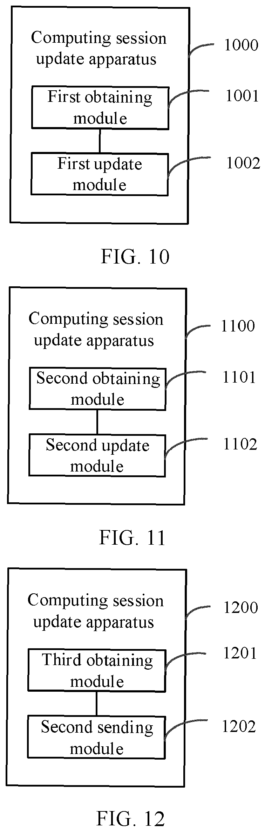

FIG. 10 is a second structural diagram of a computing session update apparatus according to an embodiment of this application. As shown in FIG. 10, the computing session update apparatus 1000 includes:
a first obtaining module 1001, configured to obtain a first message from a terminal, where the first message is used to request to update at least one of a communication resource and a computing power resource in a computing session; and
a first update module 1002, configured to update at least one of the computing power resource and the communication resource for the computing session based on the first message. Optionally, the first obtaining module 1001 is further configured to:
obtain the first message sent by the terminal through an access and mobility management function AMF.

Optionally, the first update module 1002 is further configured to:
obtain at least one of an updated computing power management policy and an updated communication management policy based on the first message; and
when the apparatus obtains the updated communication management policy, determine updated communication QoS information based on the obtained updated communication management policy, and update and allocate the communication resource in the computing session based on the updated communication QoS information; or
when the apparatus obtains the updated computing power management policy, send the updated computing power management policy to a computing power management function, to obtain computing power resource allocation information sent by the computing power management function.

Optionally, the first update module 1002 is further configured to:
when obtaining the updated communication management policy, determine the updated communication QoS information based on the obtained updated communication management policy; and
send an updated N4 interface rule to a user plane function UPF, so that the UPF updates the communication resource in the computing session based on the updated N4 interface rule, where the updated N4 interface rule is obtained based on the updated communication QoS information.

Optionally, the first update module 1002 is further configured to perform any one of the following:
sending a third message to the PCF, and obtaining at least one of the updated computing power management policy and the updated communication management policy that are sent by the PCF and that are in response to the third message, where the third message includes at least one of a communication policy modification request and a computing policy modification request; and
obtaining an updated communication management policy sent by the computing power management function.

Optionally, when the third message includes the computing power management policy modification request, the apparatus is further configured to determine the computing power management function corresponding to the computing session.

Optionally, the apparatus is further configured to:
send a second message to the terminal, where the second message is used to indicate at least one of the computing power resource and the communication resource that are updated by an SMF for the computing session.

Optionally, the apparatus is further configured to:
send the second message to the terminal through the AMF.

Optionally, the apparatus is further configured to:
receive the computing power resource allocation information sent by the computing power management function.

It should be noted that the computing session update apparatus provided in this embodiment of this application can implement processes implemented by the SMF in the method embodiment in FIG. 3, and achieve a same technical effect. To avoid repetition, details are not described herein again.

FIG. 11 is a third structural diagram of a computing session update apparatus according to an embodiment of this application. As shown in FIG. 11, the computing session update apparatus 1100 includes:
a second obtaining module 1101, configured to obtain a first message from a terminal, where the first message is used to request to update at least one of a communication resource and a computing power resource in a computing session; and
a second update module 1102, configured to update at least one of the computing power resource and the communication resource for the computing session based on the first message.

Optionally, the second obtaining module 1101 is further configured to:
obtain the first message sent by the terminal through an access and mobility management function AMF.

Optionally, the second update module 1102 is further configured to:
obtain at least one of an updated computing power management policy and an updated communication management policy based on the first message; and
when the apparatus obtains the updated computing power management policy, determine updated computing power QoS information based on the updated computing power management policy, and update and allocate the computing power resource in the computing session based on the determined updated computing power QoS information; or
when the apparatus obtains the updated communication management policy, send the updated communication management policy to an SMF, and obtain communication resource allocation information sent by the SMF.

Optionally, the second obtaining module 1101 is further configured to perform any one of the following:
sending a fourth message to a PCF, and obtaining at least one of the updated computing power management policy and the updated communication management policy that are sent by the PCF and that are in response to the fourth message, where the fourth message includes at least one of a communication policy modification request and a computing policy modification request; and
obtaining an updated computing power management policy sent by the SMF. Optionally, the second obtaining module 1101 is further configured to:
determine the updated computing power QoS information based on the obtained updated computing power management policy; and
send the updated computing power QoS information to a computing storage resource node, so that the computing storage resource node updates the computing power resource in the computing session based on the updated computing power QoS information. Optionally, the second obtaining module 1101 is further configured to:
obtain a feedback message sent by the computing storage resource node, where the feedback message includes at least one of the following: a computing resource internet protocol IP address, a storage resource IP address, a computing resource size, and a storage resource size. Optionally, the apparatus is further configured to:
send a second message to the terminal, where the second message is used to indicate at least one of the computing power resource and the communication resource that are updated by a computing power management function for the computing session.

Optionally, the apparatus is further configured to:
send the second message to the terminal through the AMF.

Optionally, the apparatus is further configured to:
receive communication resource allocation information sent by an SMF.

It should be noted that the computing session update apparatus provided in this embodiment of this application can implement processes implemented by the computing power management function in the method embodiment shown in FIG. 4, and achieve a same technical effect. To avoid repetition, details are not described herein again.

FIG. 12 is a fourth structural diagram of a computing session update apparatus according to an embodiment of this application. As shown in FIG. 12, the computing session update apparatus 1200 includes:
a third obtaining module 1201, configured to obtain a fifth message from a terminal; and
a second sending module 1202, configured to send a first message to a first function based on the fifth message, where
the first function is a session management function SMF or a computing power management function, and the first message is used to request to update at least one of a communication resource and a computing power resource in a computing session.

Optionally, the fifth message includes at least one of the following: a terminal identifier, a computing service identifier, a protocol data unit PDU session identifier, a computing session identifier, a computing service requirement, a computing service quality of experience QoE requirement, a data network name DNN, and single network slice selection assistance information S-NSSAI.

Optionally, the computing service requirement includes at least one of the following: delay information of a computing service, accuracy of the computing service, a computed amount of the computing service, a storage requirement, a type of the computing service, and an IP address of the computing service.

Optionally, the third obtaining module 1201 is further configured to perform at least one of the following:
obtaining a second message sent by the first function, where the second message is used to indicate at least one of the computing power resource and the communication resource that are updated by the first function for the computing session.

Optionally, the apparatus is further configured to:
send, to the terminal, a sixth message used to respond to the fifth message, where the sixth message is used to indicate at least one of the computing power resource and the communication resource that are updated by the first function for the computing session. Optionally, the sixth message includes at least one of the following: a PDU session identifier, a computing session identifier, communication resource update information, a communication quality of service QoS rule, computing power resource update information, and a computing power QoS rule.

Optionally, the computing power resource update information includes at least one of the following: a computing resource internet protocol IP address, a storage resource IP address, a computing resource size, and a storage resource size.

It should be noted that the computing session update apparatus provided in this embodiment of this application can implement processes implemented by the AMF in the method embodiment in FIG. 5, and achieve a same technical effect. To avoid repetition, details are not described herein again.

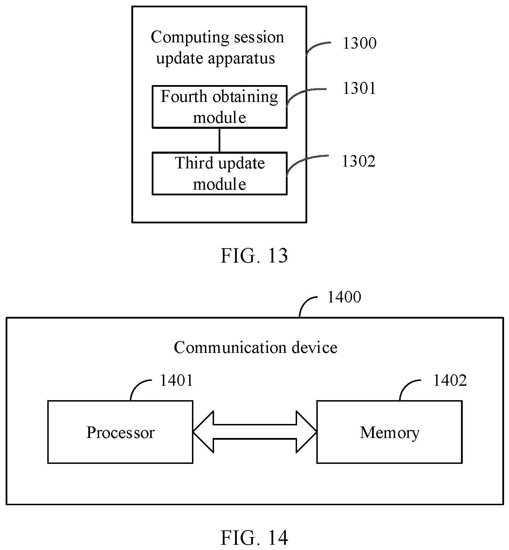

FIG. 13 is a fifth structural diagram of a computing session update apparatus according to an embodiment of this application. As shown in FIG. 13, the computing session update apparatus 1300 includes:
a fourth obtaining module 1301, configured to obtain updated computing power QoS information sent by a computing power management function; and
a third update module 1302, configured to update a computing power resource in a computing session based on the updated computing power QoS information, where
the updated computing power QoS information is determined by the computing power management function based on an updated computing power management policy obtained by using a first message, and the first message is used to request to update at least one of a communication resource and the computing power resource in the computing session.

Optionally, the apparatus is further configured to send a feedback message to the computing power management function, where the feedback message includes at least one of the following: a computing resource internet protocol IP address, a storage resource IP address, a computing resource size, and a storage resource size.

It should be noted that the computing session update apparatus provided in this embodiment of this application can implement processes implemented by the computing storage resource node in the method embodiment in FIG. 6, and achieve a same technical effect. To avoid repetition, details are not described herein again.

Optionally, as shown in FIG. 14, an embodiment of this application further provides a communication device 1400. The communication device 1400 includes a processor 1401, a memory 1402, and a program or instructions that is/are stored in the memory 1402 and that can be run on the processor 1401. For example, when the communication device 1400 is a terminal, the program or the instructions is/are executed by the processor 1401 to implement processes of the method embodiment in FIG. 2, and a same technical effect can be achieved. When the communication device 1400 is a network functional entity, the program or the instructions is/are executed by the processor 1401 to implement processes of the method embodiment in FIG. 3, or implement processes of the method embodiment in FIG. 4, or implement processes of the method embodiment in FIG. 5, or implement processes of the method embodiment in FIG. 6, and a same technical effect can be achieved. To avoid repetition, details are not described herein again.

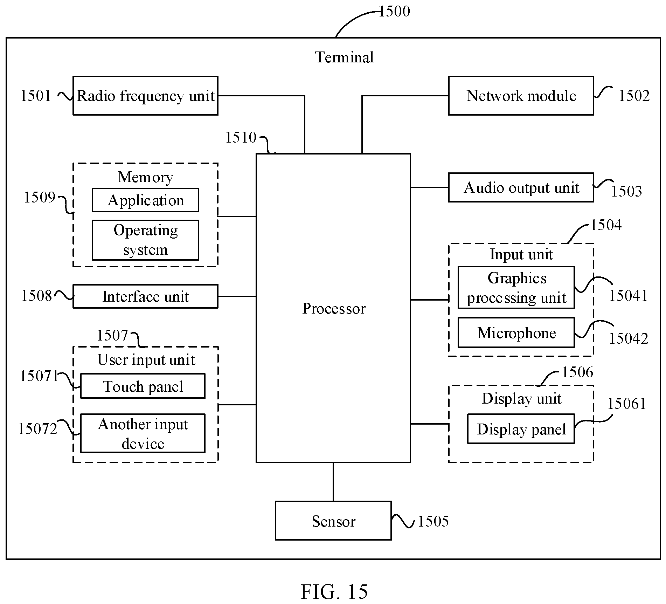

An embodiment of this application further provides a terminal. The terminal includes a processor and a communication interface. The communication interface is configured to send a first message to a first function. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 15 is a schematic diagram of a hardware structure of a terminal according to an embodiment of this application.

The terminal 1500 includes but is not limited to at least a part of components of a radio frequency unit 1501, a network module 1502, an audio output unit 1503, an input unit 1504, a sensor 1505, a display unit 1506, a user input unit 1507, an interface unit 1508, a memory 1509, a processor 1510, and the like.

A person skilled in the art may understand that the terminal 1500 may further include a power supply (such as a battery) that supplies power to each component. The power supply may be logically connected to the processor 1510 by using a power supply management system, to implement functions such as charging and discharging management, and power consumption management by using the power supply management system. The terminal structure shown in FIG. 15 constitutes no limitation on the terminal, and the terminal may include more or fewer components than those shown in the figure, or combine some components, or have different component arrangements. Details are not described herein.

It should be understood that, in this embodiment of this application, the input unit 1504 may include a graphics processing unit (Graphics Processing Unit, GPU) 15041 and a microphone 15042, and the graphics processing unit 15041 processes image data of a still picture or a video obtained by an image capture apparatus (such as a camera) in a video capture mode or an image capture mode. The display unit 1506 may include a display panel 15061. Optionally, the display panel 15061 may be configured in a form such as a liquid crystal display or an organic light-emitting diode. The user input unit 1507 includes a touch panel 15071 and another input device 15072. The touch panel 15071 is also referred to as a touchscreen. The touch panel 15071 may include two parts: a touch detection apparatus and a touch controller. The another input device 15072 may include but is not limited to a physical keyboard, a functional button (such as a volume control button or a power on/off button), a trackball, a mouse, and a joystick. Details are not described herein.

In this embodiment of this application, the radio frequency unit 1501 receives downlink data from a network side device and then sends the downlink data to the processor 1510 for processing; and sends uplink data to the network side device. Usually, the radio frequency unit 1501 includes but is not limited to an antenna, at least one amplifier, a transceiver, a coupler, a low noise amplifier, a duplexer, and the like.

The memory 1509 may be configured to store a software program or instructions and various data. The memory 1509 may mainly include a program or instruction storage area and a data storage area. The program or instruction storage area may store an operating system, and an application or instructions required by at least one function (for example, a sound playing function or an image playing function). In addition, the memory 1509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1510 may include one or more processing units. Optionally, an application processor and a modem processor may be integrated into the processor 1510. The application processor mainly processes an operating system, a user interface, an application, instructions, or the like. The modem processor mainly processes wireless communication, for example, a baseband processor. It may be understood that, alternatively, the modem processor may not be integrated into the processor 1510.

The radio frequency unit 1501 is configured to send a first message to a first function, where
the first function is a session management function SMF or a computing power management function, and the first message is used to request to update at least one of a communication resource and a computing power resource in a computing session. Optionally, the radio frequency unit 1501 is further configured to send the first message to the first function through an access and mobility management function AMF.

Optionally, the radio frequency unit 1501 is further configured to:
receive a second message that is sent by the first function and that is used to respond to the first message, where the second message is used to indicate at least one of the computing power resource and the communication resource that are updated by the first function for the computing session.

Optionally, the radio frequency unit 1501 is further configured to:
receive the second message that is sent by the first function through the AMF and that is used to respond to the first message.

Optionally, the second message includes at least one of the following: a protocol data unit PDU session identifier, a computing session identifier, communication resource update information, a communication quality of service QoS rule, computing power resource update information, and a computing power QoS rule.

Optionally, the computing power resource update information includes at least one of the following: a computing resource internet protocol IP address, a storage resource IP address, a computing resource size, and a storage resource size.

Optionally, the first message includes at least one of the following: a terminal identifier, a computing service identifier, a PDU session identifier, a computing session identifier, a computing service requirement, a computing service quality of experience QoE requirement, a data network name DNN, and single network slice selection assistance information S-NSSAI. Optionally, the computing service requirement includes at least one of the following: delay information of a computing service, accuracy of the computing service, a computed amount of the computing service, a storage requirement, a type of the computing service, and an IP address of the computing service.

Optionally, the computing power resource includes at least one of the following: a computing resource and a storage resource.

In this embodiment of this application, the terminal can send the first message to the first function to initiate the computing session update procedure, to request to update the communication resource and/or the computing power resource in the computing session, and finally implement updating of the communication resource and/or the computing power resource in the computing session, to meet the computing service requirement of the terminal. An embodiment of this application further provides a readable storage medium. The readable storage medium may be non-volatile or may be volatile. The readable storage medium stores a program or instructions. When the program or the instructions is/are executed by a processor, processes of the method embodiment in FIG. 2 are implemented, or processes of the method embodiment in FIG. 3 are implemented, or processes of the method embodiment in FIG. 4 are implemented, or processes of the method embodiment in FIG. 5 are implemented, or processes of the method embodiment in FIG. 6 are implemented, and a same technical effect can be achieved. To avoid repetition, details are not described herein again.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or instructions, to implement processes of the method embodiment in FIG. 2, or implement processes of the method embodiment in FIG. 3, or implement processes of the method embodiment in FIG. 4, or implement processes of the method embodiment in FIG. 5, or implement processes of the method embodiment in FIG. 6, and a same technical effect can be achieved. To avoid repetition, details are not described herein again.

It should be understood that the chip mentioned in this embodiment of this application may also be referred to as a system-level chip, a system chip, a chip system, or a system-on-a-chip chip. An embodiment of this application further provides a computer program product. The computer program product is stored in a non-transient readable storage medium, and the computer program product is executed by at least one processor, to implement processes of the method embodiment in FIG. 2, or implement processes of the method embodiment in FIG. 3, or implement processes of the method embodiment in FIG. 4, or implement processes of the method embodiment in FIG. 5, or implement processes of the method embodiment in FIG. 6, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements that are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such an understanding, the technical schemes of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are merely examples, but are not limitative. Under the enlightenment of this application, a person of ordinary skill in the art may further make many forms without departing from the principles of this application and the protection scope of the claims, and all the forms fall within the protection of this application.

## Claims

1. A computing session update method, comprising:
sending, by a terminal, a first message to a first function, wherein
the first function is a session management function SMF or a computing power management function, and the first message is used to request to update at least one of a communication resource and a computing power resource in a computing session.

2. The method according to claim 1, wherein the sending, by a terminal, a first message to a first function comprises:
sending, by the terminal, the first message to the first function through an access and mobility management function AMF.

3. The method according to claim 1, wherein after the sending, by a terminal, a first message to a first function, the method further comprises:
receiving, by the terminal, a second message that is sent by the first function and that is used to respond to the first message, wherein the second message is used to indicate the first function to update at least one of the computing power resource and the communication resource for the computing session.

4. The method according to claim 3, wherein the receiving, by the terminal, a second message that is sent by the first function and that is used to respond to the first message comprises:
receiving, by the terminal, the second message that is sent by the first function through an AMF and that is used to respond to the first message.

5. The method according to claim 3, wherein the second message comprises at least one of the following: a protocol data unit PDU session identifier, a computing session identifier, communication resource update information, a communication quality of service QoS rule, computing power resource update information, and a computing power QoS rule.

6. The method according to claim 5, wherein the computing power resource update information comprises at least one of the following: a computing resource internet protocol IP address, a storage resource IP address, a computing resource size, and a storage resource size.

7. The method according to claim 1, wherein the first message comprises at least one of the following: a terminal identifier, a computing service identifier, a PDU session identifier, a computing session identifier, a computing service requirement, a computing service quality of experience QoE requirement, a data network name DNN, and single network slice selection assistance information S-NSSAI.

8. The method according to claim 7, wherein the computing service requirement comprises at least one of the following: delay information of a computing service, accuracy of the computing service, a computed amount of the computing service, a storage requirement, a type of the computing service, and an IP address of the computing service.

9. The method according to claim 1, wherein the computing power resource comprises at least one of the following: a computing resource and a storage resource.

10. A computing session update method, comprising:
obtaining, by a session management function SMF, a first message from a terminal, wherein the first message is used to request to update at least one of a communication resource and a computing power resource in a computing session; and
updating, by the SMF, at least one of the computing power resource and the communication resource for the computing session based on the first message.

11. The method according to claim 10, wherein the obtaining, by an SMF, a first message from a terminal comprises:
obtaining, by the SMF, the first message sent by the terminal through an access and mobility management function AMF.

12. The method according to claim 10, wherein the updating, by the SMF, at least one of the computing power resource and the communication resource for the computing session based on the first message comprises:
obtaining, by the SMF, at least one of an updated computing power management policy and an updated communication management policy based on the first message; and
when obtaining the updated communication management policy, determining, by the SMF, updated communication QoS information based on the obtained updated communication management policy, and updating and allocating the communication resource in the computing session based on the updated communication QoS information; or
when obtaining the updated computing power management policy, sending, by the SMF, the updated computing power management policy to a computing power management function, to obtain computing power resource allocation information sent by the computing power management function.

13. The method according to claim 12, wherein when obtaining the updated communication management policy, the determining, by the SMF, updated communication QoS information based on the obtained updated communication management policy, and updating and allocating the communication resource in the computing session based on the updated communication QoS information comprises:
when obtaining the updated communication management policy, determining, by the SMF, the updated communication QoS information based on the obtained updated communication management policy; and
sending, by the SMF, an updated N4 interface rule to a user plane function UPF, so that the UPF updates the communication resource in the computing session based on the updated N4 interface rule, wherein the updated N4 interface rule is obtained based on the updated communication QoS information.

14. The method according to claim 12, wherein the obtaining at least one of an updated computing power management policy and an updated communication management policy comprises any one of the following:
sending, by the SMF, a third message to a PCF, and obtaining at least one of the updated computing power management policy and the updated communication management policy that are sent by the PCF and that are in response to the third message, wherein the third message comprises at least one of a communication policy modification request and a computing policy modification request; and
obtaining, by the SMF, an updated communication management policy sent by the computing power management function.

15. The method according to claim 14, wherein when the third message comprises the computing power management policy modification request, the SMF is further configured to determine the computing power management function corresponding to the computing session.

16. The method according to claim 10, wherein after the updating, by the SMF, at least one of the computing power resource and the communication resource for the computing session based on the first message, the method further comprises:
sending, by the SMF, a second message to the terminal, wherein the second message is used to indicate at least one of the computing power resource and the communication resource that are updated by the SMF for the computing session.

17. The method according to claim 16, wherein the sending, by the SMF, a second message to the terminal comprises:
sending, by the SMF, the second message to the terminal through an AMF.

18. The method according to claim 16, wherein before the sending, by the SMF, a second message to the terminal, the method further comprises:
receiving, by the SMF, computing power resource allocation information sent by a computing power management function.

19. A computing session update method, comprising:
obtaining, by a computing power management function, a first message from a terminal, wherein the first message is used to request to update at least one of a communication resource and a computing power resource in a computing session; and
updating, by the computing power management function, at least one of the computing power resource and the communication resource for the computing session based on the first message.

20. The method according to claim 19, wherein the obtaining, by a computing power management function, a first message from a terminal comprises:
obtaining, by the computing power management function, the first message sent by the terminal through an access and mobility management function AMF.

21. The method according to claim 19, wherein the updating, by the computing power management function, at least one of the computing power resource and the communication resource for the computing session based on the first message comprises:
obtaining, by the computing power management function, at least one of an updated computing power management policy and an updated communication management policy based on the first message; and
when obtaining the updated computing power management policy, determining, by the computing power management function, updated computing power QoS information based on the updated computing power management policy, and updating and allocating the computing power resource in the computing session based on the determined updated computing power QoS information; or
when obtaining the updated communication management policy, sending, by the computing power management function, the updated communication management policy to an SMF, and obtaining communication resource allocation information sent by the SMF.

22. The method according to claim 21, wherein the obtaining at least one of an updated computing power management policy and an updated communication management policy comprises any one of the following:
sending, by the computing power management function, a fourth message to a PCF, and obtaining at least one of the updated computing power management policy and the updated communication management policy that are sent by the PCF and that are in response to the fourth message, wherein the fourth message comprises at least one of a communication policy modification request and a computing policy modification request; and
obtaining, by the computing power management function, an updated computing power management policy sent by the SMF.

23. The method according to claim 21, wherein the determining, by the computing power management function, updated computing power QoS information based on the obtained updated computing power management policy, and updating and allocating the computing power resource in the computing session based on the determined updated computing power QoS information comprises:
determining, by the computing power management function, the updated computing power QoS information based on the obtained updated computing power management policy; and
sending, by the computing power management function, the updated computing power QoS information to a computing storage resource node, so that the computing storage resource node updates the computing power resource in the computing session based on the updated computing power QoS information.

24. The method according to claim 23, wherein after the sending, by the computing power management function, the updated computing power QoS information to a computing storage resource node, the method further comprises:
obtaining, by the computing power management function, a feedback message sent by the computing storage resource node, wherein the feedback message comprises at least one of the following: a computing resource internet protocol IP address, a storage resource IP address, a computing resource size, and a storage resource size.

25. The method according to claim 19, wherein after the updating, by the computing power management function, at least one of the computing power resource and the communication resource for the computing session based on the first message, the method further comprises:
sending, by the computing power management function, a second message to the terminal, wherein the second message is used to indicate at least one of the computing power resource and the communication resource that are updated by the computing power management function for the computing session.

26. The method according to claim 25, wherein the sending, by the computing power management function, a second message to the terminal comprises:
sending, by the computing power management function, the second message to the terminal through an AMF.

27. The method according to claim 25, wherein before the sending, by the computing power management function, a second message to the terminal, the method further comprises:
receiving, by the computing power management function, communication resource allocation information sent by an SMF.

28. A computing session update method, comprising:
obtaining, by an access and mobility management function AMF, a fifth message from a terminal; and
sending, by the AMF, a first message to a first function based on the fifth message, wherein
the first function is a session management function SMF or a computing power management function, and the first message is used to request to update at least one of a communication resource and a computing power resource in a computing session.

29. The method according to claim 28, wherein the fifth message comprises at least one of the following: a terminal identifier, a computing service identifier, a protocol data unit PDU session identifier, a computing session identifier, a computing service requirement, a computing service quality of experience QoE requirement, a data network name DNN, and single network slice selection assistance information S-NSSAI.

30. The method according to claim 29, wherein the computing service requirement comprises at least one of the following: delay information of a computing service, accuracy of the computing service, a computed amount of the computing service, a storage requirement, a type of the computing service, and an IP address of the computing service.

31. The method according to claim 28, wherein after the sending, by the AMF, a first message to a first function based on the fifth message, the method further comprises at least one of the following:
obtaining, by the AMF, a second message sent by the first function, wherein the second message is used to indicate at least one of the computing power resource and the communication resource that are updated by the first function for the computing session.

32. The method according to claim 30, wherein after the obtaining, by the AMF, a second message sent by the first function, the method further comprises:
sending, by the AMF to the terminal, a sixth message used to respond to the fifth message, wherein the sixth message is used to indicate at least one of the computing power resource and the communication resource that are updated by the first function for the computing session.

33. The method according to claim 32, wherein the sixth message comprises at least one of the following: a PDU session identifier, a computing session identifier, communication resource update information, a communication quality of service QoS rule, computing power resource update information, and a computing power QoS rule.

34. The method according to claim 33, wherein the computing power resource update information comprises at least one of the following: a computing resource internet protocol IP address, a storage resource IP address, a computing resource size, and a storage resource size.

35. A computing session update method, comprising:
obtaining, by a computing storage resource node, updated computing power QoS information sent by a computing power management function; and
updating, by the computing storage resource node, a computing power resource in a computing session based on the updated computing power QoS information, wherein
the updated computing power QoS information is determined by the computing power management function based on an updated computing power management policy obtained by using a first message, and the first message is used to request to update at least one of a communication resource and the computing power resource in the computing session.

36. The method according to claim 35, wherein after the updating, by the computing storage resource node, a computing power resource in a computing session based on the updated computing power QoS information, the method further comprises:
sending, by the computing storage resource node, a feedback message to the computing power management function, wherein the feedback message comprises at least one of the following: a computing resource internet protocol IP address, a storage resource IP address, a computing resource size, and a storage resource size.

37. A computing session update apparatus, comprising:
a first sending module, configured to send a first message to a first function, wherein
the first function is a session management function SMF or a computing power management function, and the first message is used to request to update at least one of a communication resource and a computing power resource in a computing session.

38. A computing session update apparatus, comprising:
a first obtaining module, configured to obtain a first message from a terminal, wherein the first message is used to request to update at least one of a communication resource and a computing power resource in a computing session; and
a first update module, configured to update at least one of the computing power resource and the communication resource for the computing session based on the first message.

39. A computing session update apparatus, comprising:
a third obtaining module, configured to obtain a fifth message from a terminal; and
a second sending module, configured to send a first message to a first function based on the fifth message, wherein
the first function is a session management function SMF or a computing power management function, and the first message is used to request to update at least one of a communication resource and a computing power resource in a computing session.

40. A computing session update apparatus, comprising:
a fourth obtaining module, configured to obtain updated computing power QoS information sent by a computing power management function; and
a second update module, configured to update a computing power resource in a computing session based on the updated computing power QoS information, wherein
the updated computing power QoS information is determined by the computing power management function based on an updated computing power management policy obtained by using a first message, and the first message is used to request to update at least one of a communication resource and the computing power resource in the computing session.

41. A terminal, comprising a processor, a memory, and a program or instructions that is/are stored in the memory and that may be run on the processor, wherein when the program or the instructions is/are executed by the processor, steps of the computing session update method according to any one of claims 1 to 9 are implemented.

42. A network functional entity, comprising a processor, a memory, and a program or instructions that is/are stored in the memory and that may be run on the processor, wherein when the program or the instructions is/are executed by the processor, steps of the computing session update method according to any one of claims 10 to 18 are implemented, or steps of the computing session update method according to any one of claims 19 to 27 are implemented, or steps of the computing session update method according to any one of claims 28 to 34 are implemented, or steps of the computing session update method according to either of claims 35 and 36 are implemented.

43. A readable storage medium, wherein the readable storage medium stores a program or instructions; and when the program or the instructions is/are executed by a processor, steps of the computing session update method according to any one of claims 1 to 9 are implemented, or steps of the computing session update method according to any one of claims 10 to 18 are implemented, or steps of the computing session update method according to any one of claims 19 to 27 are implemented, or steps of the computing session update method according to any one of claims 28 to 34 are implemented, or steps of the computing session update method according to either of claims 35 and 36 are implemented.

44. A chip, wherein the chip comprises a processor and a communication interface, the communication interface is coupled to the processor, and the processor is configured to run a program or instructions, to implement steps of the computing session update method according to any one of claims 1 to 9, or implement steps of the computing session update method according to any one of claims 10 to 18, or implement steps of the computing session update method according to any one of claims 19 to 27, or implement steps of the computing session update method according to any one of claims 28 to 34, or implement steps of the computing session update method according to either of claims 35 and 36.

45. A computer program product, wherein the computer program product is stored in a non-transient storage medium, and the computer program product is executed by at least one processor, to implement steps of the computing session update method according to any one of claims 1 to 9, or implement steps of the computing session update method according to any one of claims 10 to 18, or implement steps of the computing session update method according to any one of claims 19 to 27, or implement steps of the computing session update method according to any one of claims 28 to 34, or implement steps of the computing session update method according to either of claims 35 and 36.

46. A communication device, configured to perform steps of the computing session update method according to any one of claims 1 to 9, or perform steps of the computing session update method according to any one of claims 10 to 18, or perform steps of the computing session update method according to any one of claims 19 to 27, or perform steps of the computing session update method according to any one of claims 28 to 34, or perform steps of the computing session update method according to either of claims 35 and 36.
